# EUROPEAN PATENT SPECIFICATION

(11) **EP 0 678 859 B1**
(45) Date of publication and mention of the grant of the patent: **15.07.1998**
(21) Application number: 95109910.0
(22) Date of filing: 20.05.1991
(51) Int. Cl.: G11B 5/704, G11B 5/70, G11B 5/64, G11B 5/23

(54) **A flexible magnetic recording medium and a method of manufacturing the same**
Flexibler magnetischer Aufzeichnungsträger und Verfahren zu seiner Herstellung
Support d'enregistrement magnétique flexible et procédé de fabrication

(30) Priority: 21.05.1990 JP 129164/90; 25.10.1990 JP 285757/90
(43) Date of publication of application: 25.10.1995
(62) Divisional of application: 91304510.0
(73) Proprietor: HITACHI MAXELL, LTD., Ibaraki-shi Osaka (JP)
(72) Inventor: Kato, Yoshitake,, Mitsukaido-shi (JP); Fukunaga, Kazuya,, Kitasoma-gun, Ibaraki-ken (JP); Katami, Akira, Tsukuba-gun, Ibaraki-ken (JP); Oda, Shinichiro,, Kitasoma-gun, Ibaraki-ken (JP)
(74) Representative: Marshall, Monica Anne

(56) References cited:
- EP-A- 0 333 393
- EP-A- 0 350 877

## Description

### TECHNICAL FIELD

The present invention relates to a flexible magnetic recording medium having high reliability even at high temperatures.

The flexible magnetic recording medium according to the invention is a disk-shaped recording medium composed of a flexible substrate such as a plastic film having a magnetic thin film formed thereon which is capable of magnetically recording data. Such a medium in use may be accommodated in a data recording cartridge having the disk-shaped magnetic recording medium accommodated in a cartridge case to which and from which data from a computer or the like is capable of being magnetically recorded and reproduced.

### BACKGROUND OF THE INVENTION

Recently, apparatuses employing a magnetic disk are used not only in the inside of a house but also in the outside thereof as well as in a car with a wide variety of the apparatuses. Thus, a performance is severely required to the magnetic disk. More specifically, for example, when a car is parked outside a house in summer, the temperature of the interior thereof sometimes increases to 80°C or more, and thus magnetic disks carried by the car and magnetic disks provided with an apparatus incorporated in the car are required to endure this temperature. Further, as the disks and the apparatus employing the same are used in very cold regions, the disks are required to have low temperature characteristics.

Taking the above into consideration, the previously set temperature and humidity characteristics of 4 to 53°C and 8 - 90% RH have been recently changed to -40 to 85°C and 8 to 95% RH to extend the upper and lower limits of temperature and the upper limit of humidity to request severer conditions.

The expansion and contraction of a flexible magnetic disk caused by temperature and humidity mainly depend upon the temperature and humidity characteristics of a base film.

The base film of a flexible magnetic disk is, for example, a preliminarily biaxially drawn polyethylene terephthalate (PET) film. A magnetic layer having a predetermined thickness is formed on the thus processed base film to make a wide web and flexible magnetic disks of a predetermined size are stamped therefrom.

When a magnetic disk cartridge containing such a flexible magnetic disk is left under the high temperature and high humidity conditions, an output greatly varies when a signal is reproduced, and thus a problem arises in the reliability thereof.

To solve this problem, an invention as disclosed in Japanese Patent Kokai (Laid-Open) No. Sho 63-261587 is proposed. According to this document, a flexible magnetic disk and the center core fixed thereto are independently subjected to a heat treatment under the heat treatment conditions of a temperature from 50 to 100°C, a humidity from 20 to 80% RH, and a treatment time from 12 to 100 hours, or a temperature from 60 to 90°C, a humidity from 50 to 80% RH, and a treatment time from 48 to 72 hours.

When the humidity is increased in the heat treatment as described above, the treatment temperature is lowered and the treatment time is shortened, but the flexible magnetic disk is rather liable to be deformed by increasing the humidity and not preferable.

An object of the present invention is to overcome these disadvantages of the prior arts and to provide a flexible magnetic recording medium of high reliability and a method of manufacturing the same.

### DESCRIPTION OF THE INVENTION

According to one aspect of the invention, there is provided a flexible magnetic recording disk composed of a non-magnetic base film having a magnetic thin film formed thereon, wherein said flexible magnetic recording disk contracts on heating and has a maximum thermal contraction in diameter of 30 micrometers or less when left for 96 hours in an environment of 85°C and 40% RH.

Preferably the flexible magnetic recording disk according to the invention is rotationally accommodated in a cartridge case (see the patent application of this case, EP 91304510.0).

According to a second aspect, the present invention provides a method of manufacturing a flexible magnetic recording disk composed of a non-magnetic base film having a magnetic thin film formed thereon, comprising the step of forming a magnetic thin film on non-magnetic base film material and then subjecting said base film material with the magnetic thin film formed thereon to a heat treatment under the conditions of the temperature of 90°C or more and the humidity of 20% RH or less, whereby the resulting flexible magnetic recording medium contracts on heating and a disk of the said medium has the maximum thermal contraction in diameter of 30 micrometers or less when left for 96 hours in the environment of the temperature of 85°C and the humidity of 40% RH.

The above flexible magnetic disk has a very small signal level variation even if operated at a high temperature when the maximum amount of the contraction thereof is set to 30 micrometers or less under the conditions that, for example, after the magnetic thin film has been formed on the base film, the base film is subjected to a heat treatment under the conditions of the temperature of 90°C or more and the humidity of less than 20% RH and then the above flexible magnetic disk is left under the environment of 85°C and 40 RH for 96 hours, and thus the present invention can provide a flexible magnetic disk of high reliability.

### BRIEF DESCRIPTION OF THE DRAWINGS

Figure 1 is an exploded perspective view of a magnetic disk cartridge according to an example of the present invention;
Figure 2 is an enlarged cross sectional view of a magnetic disk used in the magnetic disk cartridge;
Figure 3 is a schematic arrangement showing a process for treating a web film;
Figure 4 is a diagram explaining the longitudinal direction and lateral direction on the web film;
Figure 5 is a characteristic diagram showing a heat treatment temperature of the web film and an amount thermal contraction of a disk when the web film is made to the disk after being kept under the environment of 85°C and 40 RH for 96 hours on the completion of the heat treatment;
Figure 6 and 7 are a plan view of and a side view of a magazine; and
Figure 8 is a schematic plan view showing respective magazines placed on a heat treatment shelf.

Next, examples of the present invention will be described below with reference to the drawings.

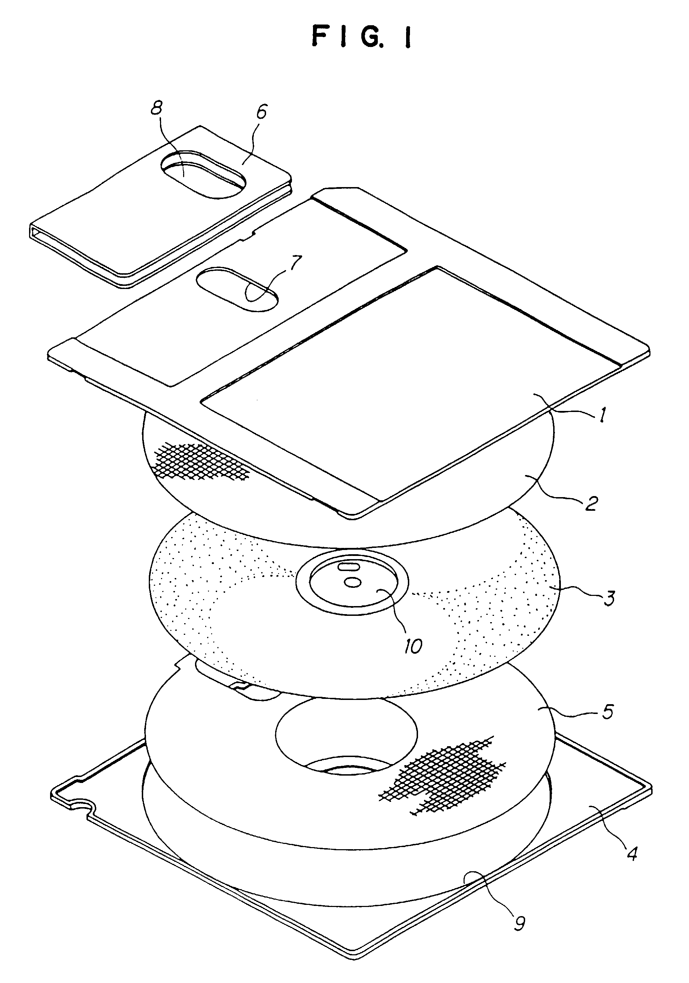

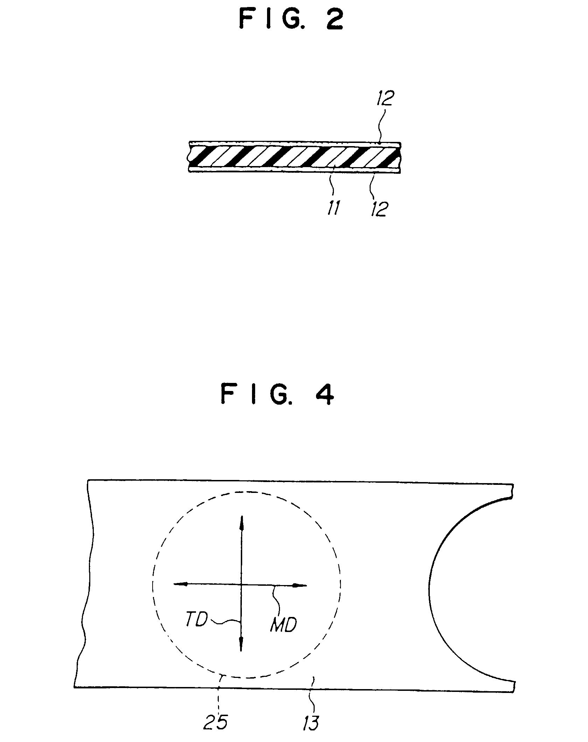

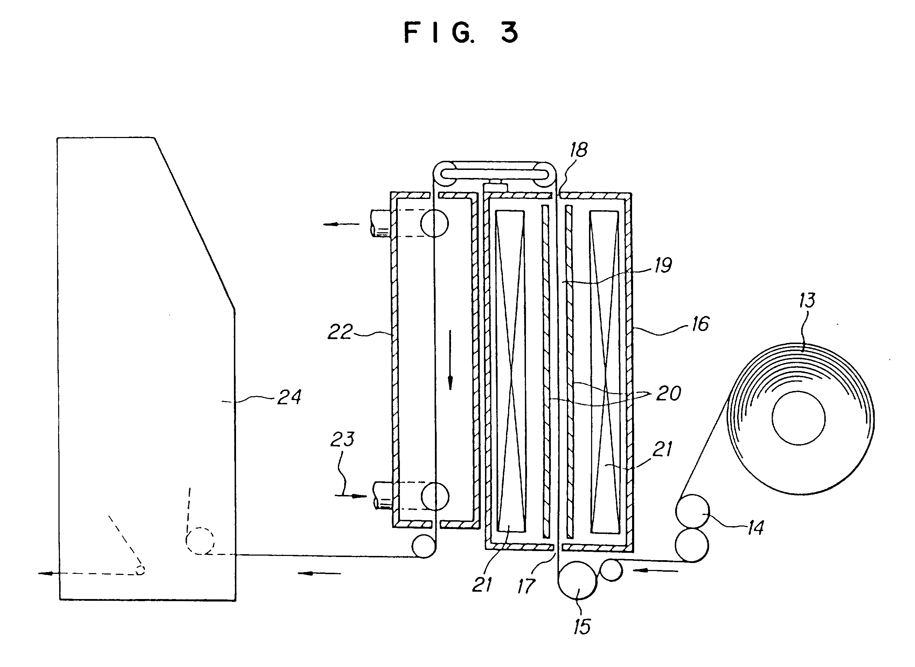

Figure 1 is an exploded perspective view of a magnetic disk cartridge according to an example of the present invention, Figure 2 is an enlarged cross sectional view of a magnetic disk used in the magnetic disk cartridge, and Figure 3 is a schematic arrangement showing a process for processing a web film.

As shown in Figure 1, the magnetic disk cartridge is mainly composed of an upper case 1, an upper cleaning sheet 2 adhered to the inner surface thereof, a flexible magnetic disk 3, a lower case 4, a lower cleaning sheet 5 adhered to the inner surface of the lower case 4, and a shutter 6.

The shutter 6 is used to open and close a head insert port 7 defined to each of the upper case 1 and the lower case 4 and has a opening 8 having a size substantially the same as that of the head insert port 7. A substantially circular recess 9 is defined to the inner surface of each of the above upper and lower cases 1 and 4 (only that for the lower case 4 is shown) to adhere the above upper and lower cleaning sheets 2 and 5 to a predetermined place. Further, a hub 10 composed, for example, of a metal thin plate such as a stainless steel plate or the like is fixed to the center of the magnetic disk 3.

The above upper and lower cleaning sheets 2 and 5 are composed of a material similar to that used in another example to be described below.

As shown in Figure 2, the magnetic disk 3 is composed of a base film 11 of 30 to 75 micrometers thick and a magnetic layer 12 of 0.5 to 4 micrometers thick coated on the surfaces thereof (although the magnetic layer is coated on both surfaces in this example, some times it is coated on only one surface).

As the base film, for example, polyethylene terephthalate, (PET), polyethylene naphthalate (PEN), aromatic polyamide, and polyimide, etc., are used.

An example of the composition of a magnetic paint forming the magnetic layer 12 is as shown below.

| Composition Ratio of Magnetic Paint | |
|---|---|
| Co containing γ-Fe₂O₃ (Coercive Force: 740 Oe, Average Particle Dia.: 0.4 µm, Axial Ratio: 10) | 100 parts by weight |
| Nitrocellulose | 19 parts by weight |
| Polyurethane (Tg: 42^{o}C) | 12 parts by weight |
| Alumina Fine Particles (Average Particle Dia.: 0.43 µm, Spherical) | 10 parts by weight |
| Carbon Black (Average Particle Dia.: 30 mµm) | 16 parts by weight |
| Oleyl Oleate | 6 parts by weight |
| Butyl Cellosorb Stearate | 1 part by weight |
| Cyclohexanone | 200 parts by weight |
| Toluene | 200 parts by weight |

The composition was mixed and dispersed in a ball mill for 72 hours, added with 8 parts by weight of a three functional isocyanate linking agent and further dispersed for 1 hour to make the magnetic paint. The magnetic paint was coated on a wide base film and dried and the base film was subjected to a calendering treatment to form a magnetic layer of a predetermined thickness to provide a wide web film.

Figure 3 is a schematic arrangement showing a process for processing the web film.

A web film 13 made as described above and wound to a roll shape was unwounded by a unwinding roll 14 and fed to a heater box 16 through a preheat roll 15. The heater box 16 is provided with an inlet 17 at the lower side thereof and an outlet 18 at the upper side thereof and a film path 19 is defined therebetween. Dumpers 20 are disposed on both sides of the film path 19 and further ceramic heaters 21 are disposed outside the dumpers.

The web film 13 is heated by the heater box 16 while being passed therethrough so that the temperature thereof is increased to 90°C or more or preferably to 95°C or more and the humidity thereof is less than 20% and preferably less than 10% RH in the state that an external force such as a tension is applied to the web film as small as possible. The upper limit of a treatment temperature is preferably about 250°C.

The web film 13 subjected to the heat treatment is fed to a cooler box 22 adjacent to the heater box 16 and cooled by a cooling gas 23 (for example, dust free dry air) flowing therein. The reason why the temperature of the web film 13 is returned near to a normal temperature is to stabilize the quality thereof by forcibly cooling it under the predetermined environment and conditions so that the cooling conditions are not affected by season and climate.

The web film 13 cooled near to the normal temperature as described above is fed in a slitter 24 and cut to a predetermined width by cutters. Note, although many stages of rollers and the cutters are provided in the slitter 24, they are not shown to avoid complication of the figure. The film cut to the predetermined width by the slitter 24 is fed to a not shown next process and stamped to a disk-shape and then the hub 10 is fixed thereto by, e.g., an adhesive to thereby provide the magnetic disk 3.

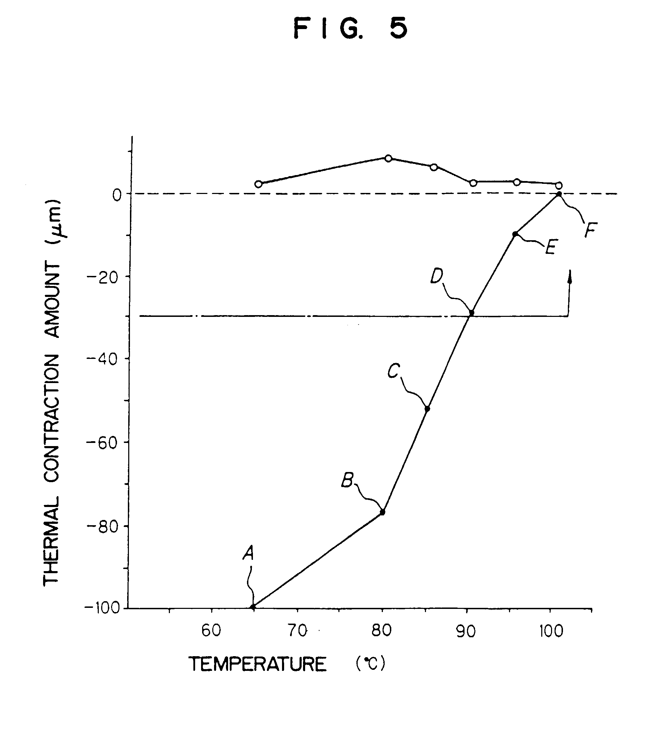

A polyethylene terephthalate film of 75 micrometers thick is used as the base film and a magnetic layer of 1 micrometer thick is formed on both surfaces thereof to constitute the web film 13. The web film 13 is heat treated under the conditions to be described later and stamped to a disk 25 of 3.5 inches (8.89 cm) in diameter after being slit. Figure 4 is a diagram showing the longitudinal direction and lateral direction of the web film 13, wherein the arrows MD in the figure show the longitudinal direction of the web film 13 and the greatest extension of the film is given in this direction while the film is manufactured. The arrows TD in the figure show a lateral direction perpendicular to the longitudinal direction MD and the degree of extension in this direction is smaller than that in the longitudinal direction MD. Disks 25 are continuously and effectively stamped from the web film 13.

The amount of the thermal contraction of each of the thus stamped disk specimens was measured after they were left for 96 hours (4 days) at 85°C and 40% RH and Figure 5 shows the result of the measurement.

In the figure, the abscissa shows the temperature at which the web film was heat treated and the ordinate shows the amount of the thermal contraction by negative values. Note that when the web film was heat treated, a humidity was less than 10% RH and a heat treatment time was 2 hours. Further, marks ● in the figure show the amount of the thermal contraction of the web film in the longitudinal direction (MD) and marks ○ show the amount of the thermal contraction (actually, positive values and slightly expanded) of the web film in the lateral direction (TD), respectively.

As apparent from the figure, although the web film has little dimensional change in the lateral direction (TD) thereof, it has a remarkable thermal contraction in the longitudinal direction (MD), and the lower the heat treatment temperature is, the greater the amount of the thermal contraction is. More specifically, when the heat treatment temperature is 65°C, the amount of the thermal contraction in the longitudinal direction of (Specimen A in the figure) is as large as 100 micrometers, when the temperature is 80°C, the amount of the thermal contraction of (Specimen B in the figure) is 77 micrometers, and when the temperature is 85°C, the thermal contraction of the (Specimen C in the figure) is 52 micrometers. When the heat treatment temperature is 90°C or more (Specimens D,E,F in the figure), however, the amount of the thermal contraction can be restricted to 30 micrometers or less (Specimens D, E, F in the figure), and in particular, when the heat treatment temperature is 95°C or more, the amount of the thermal contraction can be restricted to 10 micrometers or less.

Note that with respect to the dimensional change of the lateral direction (TD) of the web film, when the web film has a large amount of the thermal contraction in the longitudinal direction (MD), it tends to expand by the effect of the contraction, whereas the web film having a small amount of the thermal contraction in the longitudinal direction (MD) has little dimensional change in the lateral direction (TD). This exhibits that the disk has good dimensional stability.

Next, Table 1 shows the result of the measurement of the output level of each of Specimens A to F shown in Figure 5.

Note that the output level was measured in such a manner that the average output (initial output) from the one round of a track measured under the conditions identical to those of recording below was assumed to be 100% when a signal was recorded at 23°C and 50% RH by using a magnetic disk drive unit for a 3.5 inches disk having 2M bytes. Specimens and the drive unit were left for 24 hours under the environment of 85°C and 40% RH, then the above recorded signal was read out and thereafter the minimum output of the outputs from the one round of the track was determined and compared with the above initial output.

**Table 1**

| Specimen Disk | Output Level (%) |
|---|---|
| A (Comparative Example -1) | 52 |
| B (Comparative Example -2) | 34 |
| C (Comparative Example -3) | 40 |
| D (Example-1) | 92 |
| E (Example-2) | 98 |
| F (Example-3) | 96 |

As apparent from Table 1, although Specimen Disks A to C have a large variation of the output level when tested under high humidity and high temperature, Specimen Disks according to the present invention D to F have a small variation of the output level even in the test under the above severe condition and have high reliability.

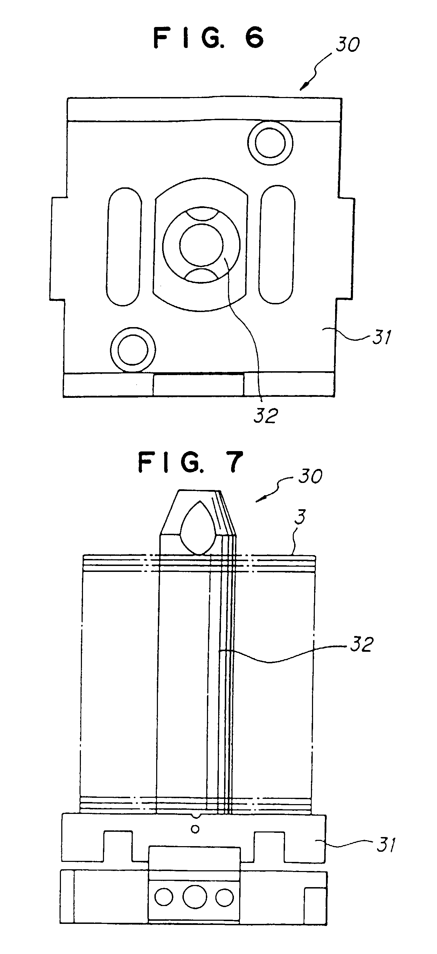

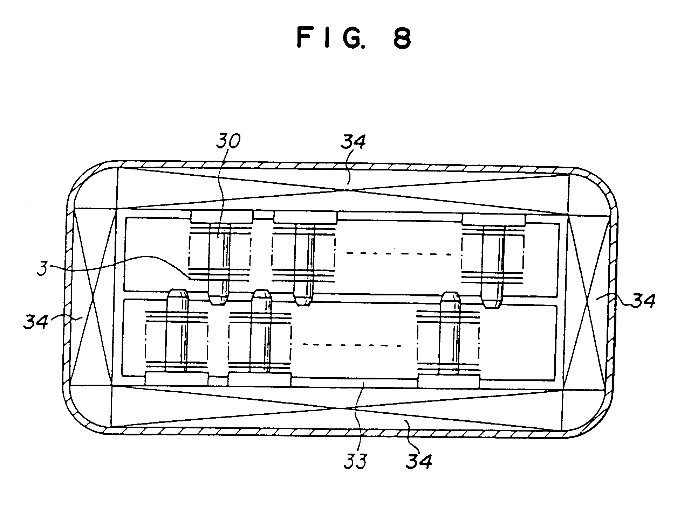

Figures 6 to 8 are diagrams showing other example of the heat treatment method, wherein Figure 6 is a plan view of a magazine, Figure 7 is a side view of the magazine, and Figure 8 is a schematic plan view showing respective magazines placed on a heat treatment shelf.

As shown in Figures 6 and 7, the magazine 30 is made of a heat resistant synthetic resin and mainly composed of a base 31 and a pin 32 standing at the center thereof.

Magnetic disks 3 of a predetermined size are stamped from a wide web film and piled up with the pin 32 therethrough, as shown in Figure 7.

The magazines 30 each holding the many piled magnetic disks 3 are sequentially and horizontally placed on the heat treatment shelf 33. A heater 34 is disposed outside the heat treatment shelf 33 and a heat treatment temperature is controlled by changing an amount of electric power supplied to the heater 34. A commercially available blower type high temperature bath can be used as the heat treatment unit. Note, although the heat treatment conditions are substantially similar to those of the above-mentioned example, a heat treatment time is preferably longer because many piled magnetic disks 3 must be subjected to the heat treatment.

In the case of this example, the magnetic disks 3 are horizontally placed to prevent a large amount of an external force from being applied thereto during heat treatment. After the magnetic disks 3 have been subjected to the heat treatment as described above, a hub is mounted to the center of each of the magnetic disks 3 by a usual method.

Further, as described above, according to the present invention, when a flexible magnetic disk, which is made in such a manner that an magnetic film is formed on a base film and then the base film with the magnetic film is subjected to a heat treatment under a high temperature/high humidity conditions of, for example, 90°C or more of temperature and less than 20% RH of humidity, has the maximum amount of thermal contraction of 30 micrometers or less after having been left for 96 hours in the environment of 85°C and 40% RH, a flexible magnetic disk of high reliability can be provided which has a very low level variation of signals even if it is used at a high temperature.

Note, it can be also considered that only the base film is subjected to the heat treatment before the magnetic film is formed thereon. Even if only the base film is heat treated, tension and heat are applied to the based film when the magnetic layer is formed thereon later, with the result that the base film is distorted and the meritorious effect of the heat treatment is lost, and thus this method is not preferable.

Further, a flexible disk was made by using the following magnetic paint as another example.

| Composition Ratio of Magnetic Paint | |
|---|---|
| Co containing γ-Fe₂O₃ (Coercive Force: 740 Oe, Average Particle Dia.: 0.4 µm, Axial Ratio: 10) | 100 parts by weight |
| Nitrocellulose | 19 parts by weight |
| Polyurethane Resin (Tg: 42^{o}C) | 12 parts by weight |
| Alumina Fine Particles (Average Particle Dia.: 0.43 µm, Spherical) | 10 parts by weight |
| Carbon Black 1 (Average Particle Dia: 30 mµm) | 6 parts by weight |
| Carbon Black 2 (Average Particle Dia: 75 mµm) | 10 parts by weight |
| Oleyl Oleate | 6 parts by weight |
| Butyl Cellosorb Stearate | 1 part by weight |
| Cyclohexanone | 200 parts by weight |
| Toluene | 200 parts by weight |

The composition was mixed and dispersed in a ball mill for 72 hours, added with 8 parts by weight of a three functional isocyanate linking agent and further dispersed for 1 hour to make a magnetic paint. The magnetic paint was coated on a wide base film of 75 micrometers thick as shown in Table 2 and dried, and the base film was subjected to a calendering treatment to form a magnetic layer of 0.9 micrometer thick to provide a wide web film.

Disks having an outer diameter of 3.5 inches (8.89 cm) were stamped from the web film to make flexible magnetic disks.

The output level, expansion coefficient related to temperature, expansion coefficient related to humidity, softening point, and disk deformability of the thus obtained disks (recording density: 135 TPI) were measured, and Table 2 shows the result of the measurement.

The above output level is the output variation of the 2F signals from the side 0 track and the outermost circumference track caused by the following change in the environmental conditions when measured by using a floppy disk drive unit for 3.5 inches (8.89 cm) floppy disk of 2M bytes.

### (Conditions 1)

As writing conditions, a signal was recorded at 5°C and 10% RH and the average output from the one round of a track was measured under the same conditions and assumed to be 100 %.

Thereafter, as reading conditions, a disk drive unit was left under the environment of 85°C and 90% RH for 24 hours and then the minimum output of outputs from the one round of a track was expressed as a ratio to the average output under the same conditions as the above writing conditions.

### (Conditions 2)

An output level was measured under the same conditions as above except that writing conditions and environmental conditions when a reference output was measured were set to 5°C and 90% RH and the environmental conditions at reading were set to 85°C and 10% RH.

The expansion coefficient related to temperature and expansion coefficient related to humidity were measured with respect to 10 directions each divided into 18° angle from a reference line arbitrarily drawn from the center of a disk in the radial direction thereof.

Note that as the expansion coefficient related to temperature, the value in which an off track amount had a tendency to increase was selected from the maximum value and the minimum value.

Further, the average value of the expansion coefficients related to humidity was employed because the differences of values thereof were small in the respective directions.

Softening point was obtained from the turning point of the storage elasticity of a flexible magnetic disk by measuring the dynamic viscous elasticity thereof.

The disk deformability was measured in such a manner that the disk was loaded on a flexible magnetic disk drive unit with the magnetic head thereof set to a loaded state and left at 85°C and 40% RH for 48 hours, and thereafter the presence or absence of the disk deformation at the head load position was visually observed.

As apparent from Table 2, Specimens according to the examples of the present invention have less disk deformation, and further less output level variation under the conditions 1 (writing at low temperature and low humidity and reading at high temperature and high humidity) as well as under the conditions 2 (writing at low temperature and high humidity and reading at high temperature and low humidity) as compared with Comparative Examples, and thus have higher reliability.

Note that the magnetic material used in the present invention includes magnetic metal power such as Fe metal magnetic power, and Co magnetic metal powder, etc., and barium ferrite magnetic powder in addition to the Co containing γ-Fe₂O₃ magnetic powder.

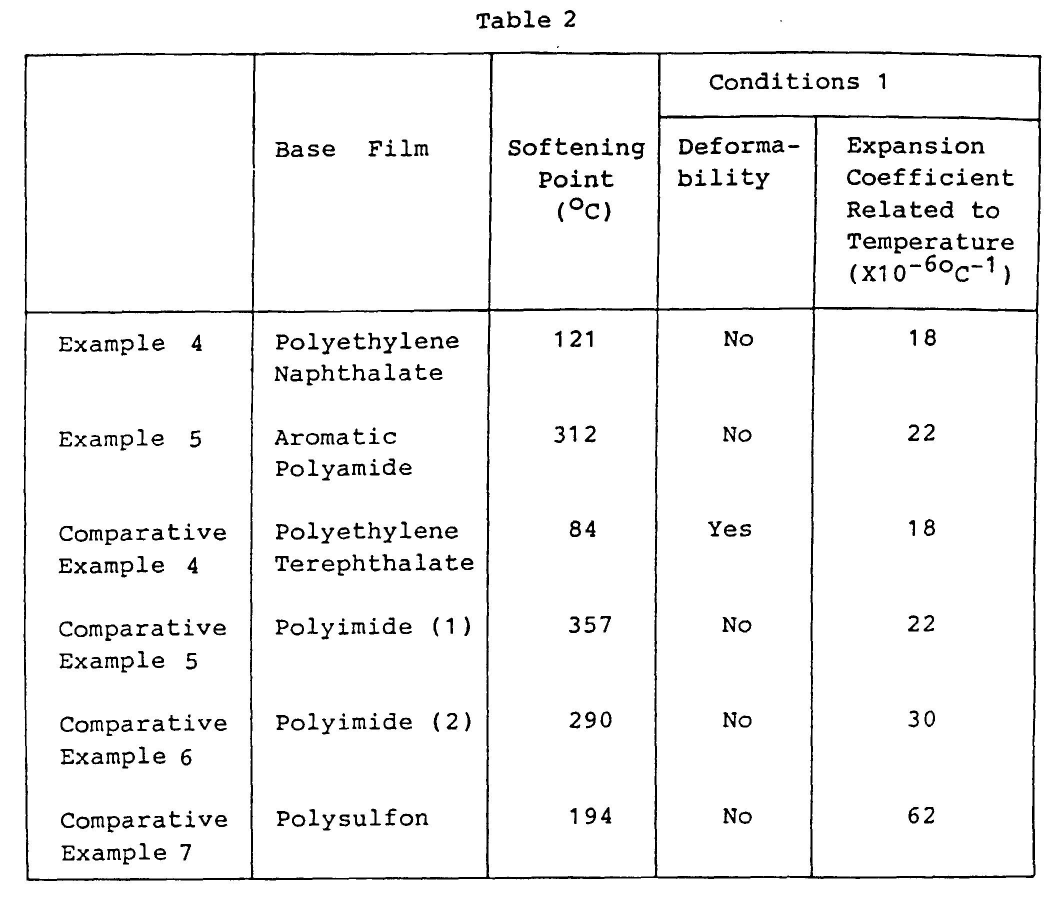

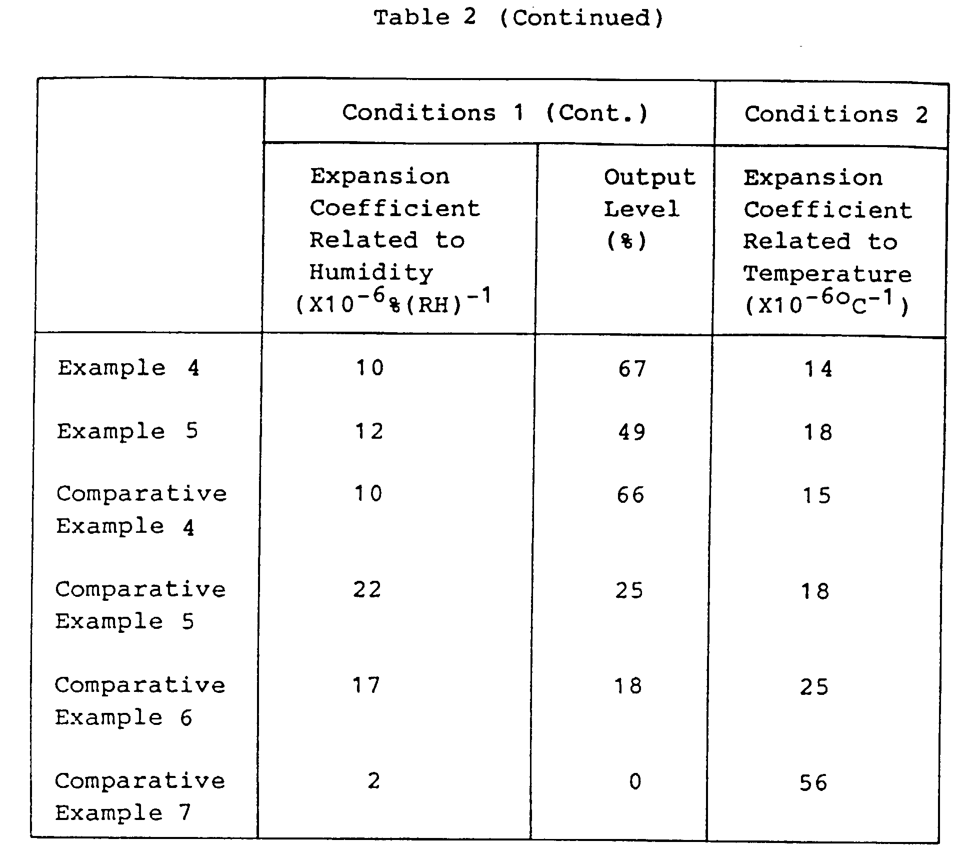

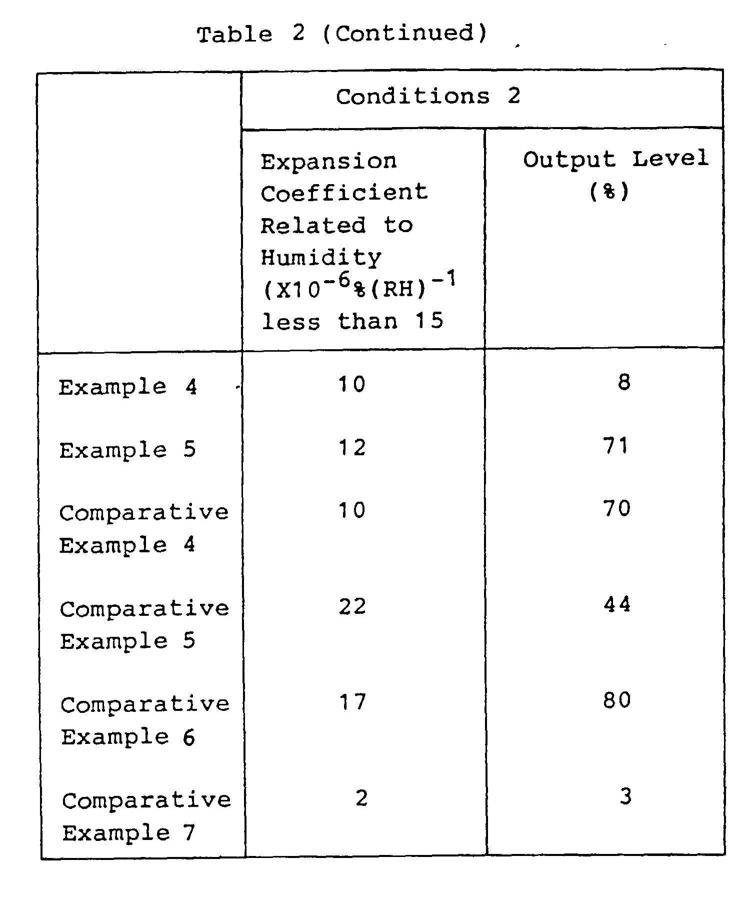

## Claims

1. A flexible magnetic recording disk composed of a non-magnetic base film having a magnetic thin film formed thereon, wherein said flexible magnetic recording disk contracts on heating and has a maximum thermal contraction in diameter of 30 micrometers or less when left for 96 hours in an environment of 85°C and 40% RH.

2. A method of manufacturing a flexible magnetic recording disk composed of a non-magnetic base film having a magnetic thin film formed thereon, comprising the step of forming a magnetic thin film on non-magnetic base film material and then subjecting said base film material with the magnetic thin film formed thereon to a heat treatment under the conditions of the temperature of 90°C or more and the humidity of 20% RH or less, whereby the resulting flexible magnetic recording medium contracts on heating and a disk of the said medium has the maximum thermal contraction in diameter of 30 micrometers or less when left for 96 hours in the environment of the temperature of 85°C and the humidity of 40% RH.

## Patentansprüche

1. Biegsame magnetische Aufzeichnungsscheibe zusammengesetzt aus einem nicht-magnetischen Basisfilm mit einem dünnen magnetischen Film darauf, wobei sich die biegsame magnetische Aufzeichnungsscheibe beim Erwärmen zusammenzieht und eine maximale thermische Kontraktion bzgl. ihres Durchmessers von 30 Mikrometer oder weniger aufweist, wenn sie für 96 Stunden in einer Umgebung von 85°C und 40% RH gelassen wird.

2. Verfahren zum Herstellen einer biegsamen magnetischen Aufzeichnungsscheibe, die aus einem nicht-magnetischen Basisfilm mit einem dünnen magnetischen Film darauf zusammengesetzt ist, umfassend den Schritt des Ausbildens eines magnetischen dünnen Films auf einem nicht-magnetischen Filmbasismaterials und dann des Unterziehens des Filmbasismaterials zusammen mit dem darauf ausgebildeten dünnen magnetischen Film einer Wärmebehandlung bei Temperaturbedingungen von 90°C oder mehr und einer Feuchtigkeit von 20% RH oder weniger, wobei der sich ergebende biegsame magnetische Aufzeichnungsträger sich beim Erwärmen zusammenzieht und eine Scheibe aus diesem Aufzeichnungsträger eine maximale thermische Kontraktion bzgl. ihres Durchmessers von 30 Mikrometer oder weniger besitzt, wenn sie für 96 Stunden in der Umgebung einer Temperatur von 85°C und einer Feuchtigkeit von 40% RH gelassen wird.

## Revendications

1. Disque flexible d'enregistrement magnétique composé d'un film de base non-magnétique présentant un film mince magnétique formé dessus, dans lequel ledit disque flexible d'enregistrement magnétique se contracte lors du chauffage et présente un retrait thermique maximum de 30 µm ou moins en ce qui concerne le diamètre, quand on le laisse pendant 96 heures dans un environnement de 85 °C et 40 % d'humidité relative (HR).

2. Procédé de fabrication d'un disque flexible d'enregistrement magnétique composé d'un film de base non-magnétique présentant un film mince magnétique formé dessus, comprenant les étapes qui consistent à former un film mince magnétique sur un matériau de film de base non-magnétique, et ensuite à soumettre ledit matériau de film de base avec le film mince magnétique formé dessus, à un traitement thermique dans des conditions de température de 90 °C ou plus et d'humidité de 20 % HR ou moins, dans lequel le support flexible d'enregistrement magnétique résultant se contracte lors du chauffage et un disque dudit support présente un retrait thermique maximum de 30 µm ou moins en ce qui concerne le diamètre, quand on le laisse pendant 96 heures dans un environnement de température de 85 °C et d'humidité de 40 % HR.
